# EUROPÄISCHE PATENTSCHRIFT

(11) **EP 0 292 712 B1**
(45) Veröffentlichungstag und Bekanntmachung des Hinweises auf die Patenterteilung: **28.07.1993**
(21) Anmeldenummer: 88106647.6
(22) Anmeldetag: 26.04.1988
(51) Int. Cl.: B23B 39/00, B23B 39/16, B27C 9/04, B23Q 39/02

(54) **Maschine zum Bearbeiten von plattenförmigen Werkstücken**
Machine for working plate-like workpieces
Machine à usiner des pièces plates

(30) Priorität: 27.05.1987 DE 3717998
(43) Veröffentlichungstag der Anmeldung: 30.11.1988
(73) Patentinhaber: PRIESS, HORSTMANN & CO. MASCHINENBAU GMBH & CO. KG, 32479 Hille (DE)
(72) Erfinder: Schlomann, Friederich, D-4970 Bad Oeynhausen 6 (DE)
(74) Vertreter: Hoefer, Theodor, Dipl.-Ing.

(56) Entgegenhaltungen:
- EP-A- 0 040 317
- EP-A- 0 208 904
- CH-A- 422 293
- DE-A- 2 106 559
- DE-A- 2 928 108
- DE-A- 3 120 331
- US-A- 3 981 605

## Beschreibung

Die Erfindung betrifft eine Maschine zum Bearbeiten von plattenförmigen Werkstücken, wie Möbelwandungen oder dergleichen, in waagerechter Lage, mit mindestens einem ein senkrecht verfahrbares Werkzeug aufweisenden Werkzeugträger, nach dem Oberbegriff des Anspruches 1.

Eine derartige Maschine ist aus der EP-A-0 208 904 bekannt und weist neben einem ein senkrecht verfahrbares Werkzeug aufweisenden Werkzeugträger zwei an einem Maschinengestell in einer waagerechten Ebene parallel verschiebbare Klemmleisten für den Eingriff an den Stirnseiten des zu bearbeitenden Werkstückes auf.

Bei derartigen Maschinen wurden bisher die Werkstücke je nach ihrer Größe auf den Maschinentisch gelegt, dort befestigt und an einer Seite bearbeitet. In dem Bereich, wo die plattenförmigen Werkstücke an dem Maschinentisch abgestützt waren, konnten sie von dieser Seite nicht bearbeitet werden. Es war daher erforderlich, entsprechende Umrüstarbeiten durchzuführen, um an beliebigen Stellen die Bearbeitung zu ermöglichen. Solche Umrüstungen waren umständlich und aufwendig.

Der Erfindung liegt daher die Aufgabe zugrunde, eine Maschinen zum Bearbeiten von plattenförmigen Werkstücken der im Oberbegriff des Anspruches 1 angegebenen Art zu schaffen, bei der verschiedene Bearbeitungswerkzeuge an einem ortsfest eingespannten Werkstück an jeder beliebigen Stelle sowohl der unteren als auch der oberen waagerechten Oberfläche angebracht werden können, wobei eine einzige Einspannung für die mehreren Bearbeitungsgänge genügen soll, ohne daß zusätzliche Umrüstarbeiten erforderlich sind.

Die Lösung dieser Aufgabe erfolgt durch die Merkmale des Anspruches 1.

Jeder Klemmleiste ist erfindungsgemäß eine an der Unterseite der zugehörigen Tischplatte befestigte Auflageleiste für das Werkstück zugeordnet. Solche Auflageleisten können aus Holz bestehen, um das Werkstück schonend abzulegen.

Zwischen den Tischplatten ist erfindungsgemäß der Werkzeugträger als unterer Werkzeugträger auf einem Support montiert, der längs der Führungsholme des Maschinengestells geradlinig verschiebbar gelagert ist. Diese Anordnung ermöglicht das Verfahren des unteren Werkzeugträgers in Richtung der Führungsholme des Maschinengestells. An dem Support sind waagerechte Führungsholme angeordnet, die oberhalb der Führungsholme des Maschinengestells und rechtwinklig zu diesen verlaufen. Infolge dieser rechtwinklig angeordneten oberen Führungsholme kann der Werkzeugträger, der an einer auf den Führungsholmen des Supports abgestützten Montageplatte befestigt ist, auch in Querrichtung der Führungsholme des Maschinengestells verfahren und somit auch in dieser Richtung an jede beliebige Stelle des Werkstücks gelangen. Auch für diese Bewegung sind Pneumatikzylinder an dem Support vorgesehen, die den automatischen Betrieb begünstigen.

An der Montageplatte ist erfindungsgemäß ein in der Seitenansicht ungefähr C-förmiger, einen Freiraum für das Werkstück umgebender Kragarm befestigt, an dessen oberem freien Ende ein oberer Werkzeugträger mit einem senkrecht ausfahrbaren Werkzeug angeordnet ist. Infolge dieses Kragarms kann das Werkstück ebenso, wie an seiner Unterseite, an jedem beliebigen gewünschten Punkt der Oberseite bearbeitet werden. Es ist somit beispielsweise möglich, sowohl von unten als auch von oben in dem Werkstück durchgehende Bohrungen oder Sackbohrungen anzubringen sowie Ausnehmungen zu fräsen und Eindrückungen vorzunehmen, wie sie für das Anbringen von Beschlägen an Möbelteilen erforderlich sind.

Erfindungsgemäß sind die Klemmleisten zu beiden Seiten des Werkzeugträgers an einer rechten Tischplatte und an einer linken Tischplatte angeordnet, welche längs waagerechter, am Maschinengestell befestigter Führungsholme geradlinig verschiebbar gelagert sind. Durch eine Verschiebung dieser Tischplatten mit den Klemmleisten längs der Führungsholme kann dann erstens der entsprechend der Werkstückgröße erforderliche Abstand der Klemmleisten voneinander voreingestellt werden und zweitens läßt sich nach dem Einlegen des Werkstücks durch weiteres Verfahren eines Tisches mit einer Klemmleiste das Werkstück an seinen Stirnseiten einspannen.

Am Maschinengestell sind bevorzugt für die geradlinige Verschiebung der Tischplatten Pneumatikzylinder angeordnet. Dadurch wird eine einfache und für den automatischen Betrieb geeignete Verschiebemöglichkeit der Tischplatten geschaffen.

Dem unteren Werkzeugträger ist bevorzugt eine hochfahrbare Werkstückstütze zugeordnet, über welcher sich ein dem oberen Werkzeugträger zugeordneter absenkbarer Spannschuh befindet. Diese Werkstückstütze und der Spannschuh befinden sich jeweils in unmittelbarer Nähe einer Bearbeitungsstelle und halten hier das Werkstück fest, so daß es sich während der Bearbeitung nicht durchbiegen kann. Auf diese Weise wird die Bearbeitung besonders genau ausgeführt. Die Werkstückstütze und der Spannschuh können von Druckmittelzylindern verfahren werden.

Bevorzugte Ausführungsformen der Erfindung sind in den Schutzansprüchen enthalten.

Ein Ausführungsbeispiel der Erfindung ist in der Zeichnung dargestellt und wird im folgenden näher beschrieben.
Es zeigen:
- Fig.1: eine Vorderansicht einer erfindungsgemäßen Maschine, das ist die Ansicht der Seite, von welcher aus das Werkstück eingelegt und entnommen wird;
- Fig.2: eine Draufsicht auf die Maschine gemäß Fig.1, wobei ein Kragarm des Bearbeitungsbereichs wegen besserer Überseichtlichkeit nicht dargestellt ist;

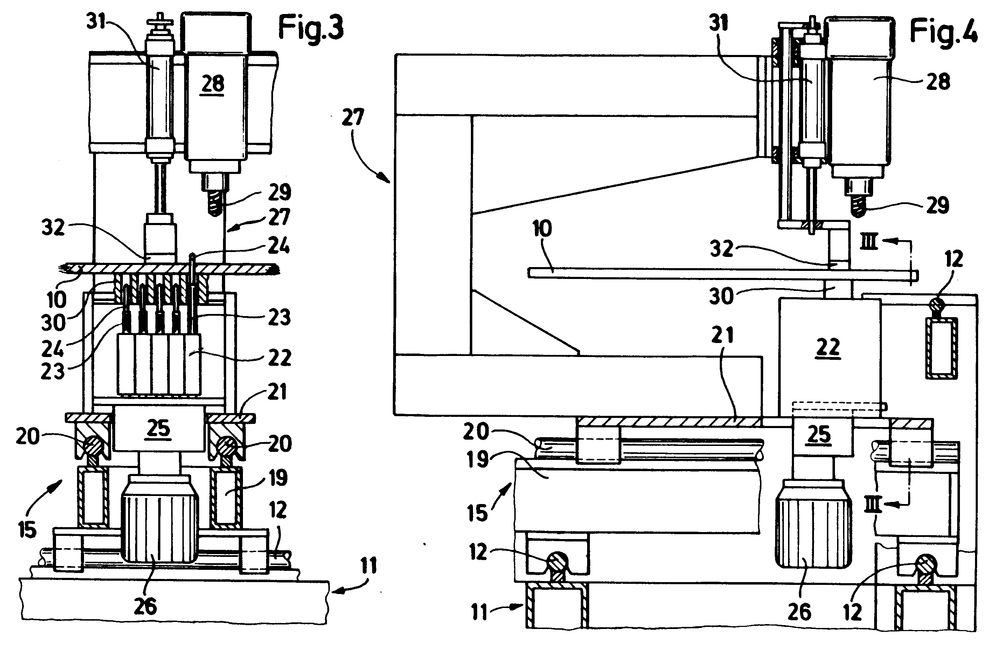

- Fig.3: eine Vorderansicht des Bearbeitungsbereichs der Maschine in gegenüber Fig.1 vergrößerter Darstellung mit teilweisem senkrechten Schnitt gemäß Linie III-III der Fig. 4;
- Fig.4: eine Seitenansicht des Bearbeitungsbereichs der Maschine.

Eine erfindungsgemäße Maschine zur Bearbeitung von plattenförmigen Werkstücken (10) weist an einem langgestreckten Maschinengestell (11) mehrere parallele geradlinige Führungsholme (12) auf, die sowohl zur Abstützung waagerecht verschiebbarer Tischplatten und eines Supports dienen. Zwischen einer rechten Tischplatte (13) und einer linken Tischplatte (14) ist ein Support (15) angeordnet, der sich ebenso, wie die Tischplatten (13 und 14) längs der Führungsholme (12) des Maschinengestells verschieben läßt. Für diese Verschiebungen sind nicht dargestellte Pneumatikzylinder vorgesehen.

Die waagerechten Tischplatten (13 und 14) sind für die Aufnahme und das Festspannen des Werkstücks (10) vorgesehen. An jeder Tischplatte (13 bzw. 14)ist eine geradlinige Klemmleiste (16) angeordnet, die einer Stirnseite des Werkstücks (10) zugewandt ist. Im Bereich der Klemmleisten (16) befinden sich an den Tischplatten (13 und 14) außerdem Auflageleisten (17), die an den Unterseiten der Tischplatten befestigt sind und über diese geringfügig hinausragen. Das Werkstück (10) läßt sich also zwischen den Tischplatten (13 und 14) auf deren Auflageleisten (17) ablegen. Die Endstellung des Werkstücks in Bewegungsrichtung quer zu den Führungsholmen (12) wird von Anschlägen (18) bestimmt, die an den hinteren Enden der Klemmleisten (16) an den Tischplatten (13 und 14) befestigt sind.

Auf einem Untergestell (19) des Supports (15) sind zwei parallele Führungsholme (20) befestigt, die rechtwinklig zu den Führungsholmen (12) des Maschinengestells (11) verlaufen. Der weitere Teil des Supports (15) ist auf diesen Führungsholmen (20) abgestützt und läßt sich daher in Querrichtung der Führungsholme (12) des Maschinengestells verschieben. An einer waagerechten Montageplatte (21) dieses oberen Teils des Supports (15) ist ein unterer Werkzeugträger (22) mit mehreren Bohrspindeln (23) und Bohrern (24) als Werkzeugen über ein Getriebe (25) und einem Antriebsmotor (26) angeordnet. Die Bohrspindeln (23) und die Bohrer (24) verlaufen dabei senkrecht und ragen aufwärts. Sie sind für die Bearbeitung des Werkstücks (10) von der Unterseite aus vorgesehen.

An der Montageplatte (21) ist außerdem ein C-förmiger Kragarm (27) befestigt, der den Raum umschließt, in dem das Werkstück (10) gehalten ist. Am oberen Ende des Kragarms (27) ist ein oberer Werkzeugträger (28) mit einem mit senkrechter Welle angeordneten Werkzeug (29) befestigt. Dieser obere Werkzeugträger (28) ermöglicht durch Absenken des Werkzeugs (29) die Bearbeitung des Werkstücks (10) von der Oberseite aus.

Sowohl dem unteren Werkzeugträger (22) als auch dem oberen Werkzeugträger (28) sind Befestigungsvorrichtungen für das Werkstück (10) zugeordnet. So befindet sich im Bereich der Bohrer (24) eine nach oben ausfahrbare Werkstückstütze (30), während neben dem oberen Werkzeugträger (28) ein Druckmittelzylinder (31) an dem Kragarm (27) befestigt ist, dessen senkrecht ausfahrbare Kolbenstange am unteren Ende einen Spannschuh (32) trägt. Die Werkstückstütze (30) und der Spannschuh (32) befinden sich senkrecht übereinander, wobei zwischen ihnen ein Teil des Werkstücks (10) jeweils liegt. In der Nähe der Werkstückstütze (30) und des Spannschuhs (32) befinden sich dann die Bearbeitungsstellen, die mit dem Werkzeug (29) und einem der Bohrer (24) behandelt werden.

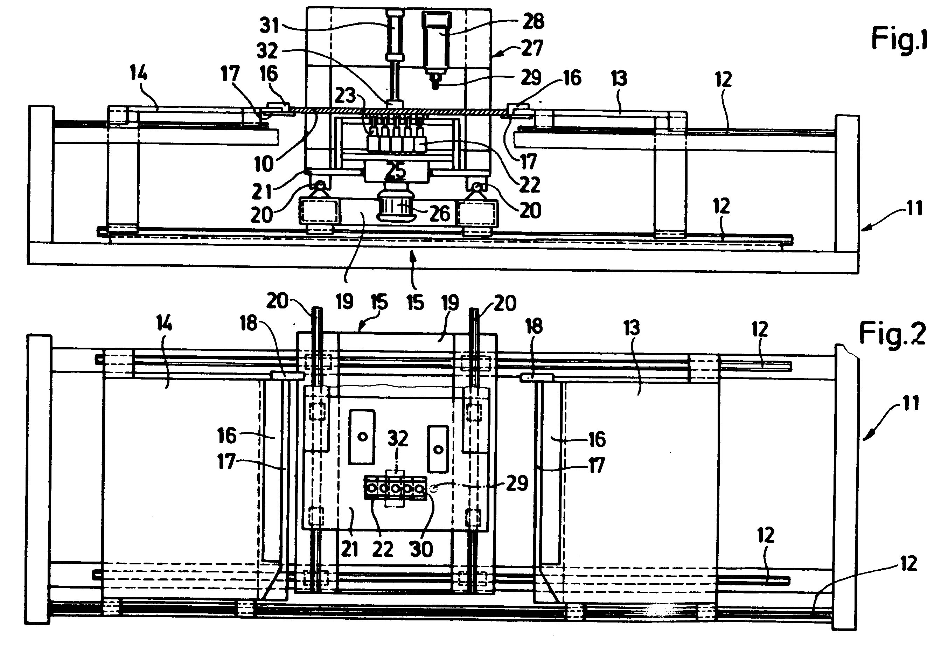

Die erfindungsgemäße Maschine arbeitet wie folgt. Zu Beginn steht die linke Tischplatte (14) fest an ihrem Platz. Die rechte Tischplatte (13) wird über einen Pneumatikzylinder entsprechend der Länge des zu bearbeitenden Werkstücks (10) verfahren, sie wird zunächst gemäß Fig. 1 nach rechts außen verfahren, dann wird der Support (15) auf eine Koppelposition gefahren, die der Werkstücklänge entspricht. Die Einstellung des Supports (15) erfolgt dabei elektronisch, wobei die Werkstücklänge programmiert ist. Nun wird die rechte Tischplatte (13) gegen den Support (15) gefahren und ist damit auf die bestimmte Werkstücklänge eingestellt. Die rechte Tischplatte wird dann festgeklemmt. Nun kann der Support (15) auf die erste Bearbeitungsposition fahren. Nach dem Einlegen des Werkstücks (10) wird die linke Tischplatte (14) mit Hilfe eines Pneumatikzylinders geringfügig in Richtung Werkstück (10) verfahren und klemmt dabei das Werkstück (10) fest.

Nun kann der automatische Arbeitsablauf von der Bedienungsperson durch Drücken einer Taste ausgelöst werden. Die Werkstückstütze (30) fährt senkrecht hoch und der Spannschuh (32) fährt senkrecht herunter, bis das Werkstück (10) auch in senkrechter Richtung fixiert ist. Jetzt kann wahlweise eine bestimmte Bohrspindel (23) von unten und/oder das Werkzeug (29) von oben das Werkstück (10) bearbeiten. Dabei können durchgehende Bohrungen oder Sacklochbohrungen gebohrt oder Griffmuscheln beispielsweise gefräst werden. Nach dieser Bearbeitung fahren die Arbeitsspindeln in ihre Ausgangslage und gleichzeitig fahren auch der Spannschuh (32) und die Werkstückstütze (30) zurück, so daß der Support (15) von dem Werkstück (10) wieder getrennt ist. Durch Verfahren des Supports (15) längs der Führungsholme (12) des Maschinengestells (11) und in Querrichtung dazu längs der Führungsholme (20) kann nun eine neue Bearbeitungsstelle positioniert werden. Nachdem alle Bearbeitungen des Werkstücks auf diese Weise durchgeführt worden sind, gibt die linke Tischplatte (14) das eingeklemmte Werkstück (10) frei, indem sie gemäß Fig.1 der Zeichnung längs der Führungsholme (12) geringfügig nach links verfahren wird.

## Patentansprüche

1. Maschine zum Bearbeiten von plattenförmigen Werkstücken (10), wie Möbelwandungen oder dergleichen in waagerechter Lage, mit mindestens einem ein senkrecht verfahrbares Werkzeug (23, 24) aufweisenden Werkzeugträger (22), und mit zwei an einem Maschinengestell (11) in einer waagerechten Ebene parallel verschiebbaren Klemmleisten (16) für den Eingriff an den Stirnseiten des zu bearbeitenden Werkstücks (10), wobei jeder Klemmleiste (16) eine Auflageleiste (17) für das Werkstück (10) zugeordnet ist, dadurch gekennzeichnet, daß die Klemmleisten (16) zu beiden Seiten des Werkzeugträgers (22) an einer rechten Tischplatte (13) und an einer linken Tischplatte (14) angeordnet sind, die längs waagerechter, am Maschinengestell (11) befestigter Führungsholme (12) geradlinig verschiebbar gelagert sind, daß die Auflageleisten (17) jeweils an der Unterseite der zugehörigen Tischplatte (13, 14) befestigt sind, daß der Werkzeugträger als unterer Werkzeugträger (22) auf einem Support (15) montiert ist, der zwischen den Tischplatten (13, 14) längs der Führungholme (12) des Maschinengestelles (11) geradlinig verschiebbar gelagert ist, daß an dem Support (15) waagerechte Führungsholme (20) des Maschinengestelles (11) und rechtwinklig zu diesen verlaufen, daß der untere Werkzeugträger (22) an einer auf den Führungsholmen (20) des Supports (15) abgestützten Montageplatte (21) befestigt ist, und daß an der Montageplatte (21) ein in der Seitenansicht ungefähr C-förmiger, einen Freiraum für das Werkstück (20) umgebender Kragarm (27) befestigt ist, an dessen oberem freien Ende ein oberer Werkzeugträger (28) mit einem senkrecht ausfahrbaren Werkzeug (29) angeordnet ist.

2. Maschine nach Anspruch 1, dadurch gekennzeichnet, daß am Maschinengestell (11) für die geradlinige Verschiebung der Tischplatten (13, 14) Pneumatikzylinder angeordnet sind.

3. Maschine nach einem der Ansprüche 1 oder 2, dadurch gekennzeichnet, daß dem unteren Werkzeugträger (22) eine hochfahrbare Werkstückstütze (30) zugeordnet ist, über welcher sich ein dem oberen Werkzeugträger (28) zugeordneter absenkbarer Spannschuh (32) befindet.

4. Maschine nach einem der Ansprüche 1 bis 3, dadurch gekennzeichnet, daß der Spannschuh (32) am unteren Ende der Kolbenstange eines Druckmittelzylinders (31) angeordnet ist.

## Claims

1. A machine for working plate-shaped workpieces (10), such as walls of pieces of furniture or similar in the horizontal position, having at least one tool support (22) comprising a vertically displaceable tool (23, 24), and having two clamping blocks (16), which on a machine frame (11) can be moved parallel in a horizontal plane, for engagement on the end faces of the workpiece (10) to be worked, whereby to each clamping block (16) is associated a support rail (17) for the workpiece (10),
**characterised in that** the clamping blocks (16) are disposed on both sides of the tool support (22) on a right-hand table top (13) and on a left-hand table top (14), which are mounted so that they can be moved in a straight line along horizontal guide struts (12) attached to the machine frame (11),
**in that** the support rails (17) are attached to the under side of the associated table top (13, 14),
**in that** the tool support is mounted as a lower tool support (22) on a support (15), which is housed so that it can move in a straight line between the table tops (13, 14) along the guide struts (12) of the machine frame (11),
**in that** guide struts (20) of the machine frame (11) which are horizontal to the support (15) extend at right angles thereto,
**in that** the lower tool support (22) is attached to a mounting plate (21) supported on the guide struts (20) of the support (15),
**and in that** to the mounting plate (21) is attached a cantilever (27), which is roughly C-shaped in the lateral elevation and encloses a clearance for the workpiece (20), and at the upper free end of which is disposed an upper tool support (28) having a vertically extensible tool (29).

2. A machine according to Claim 1,
**characterised in that** pneumatic cylinders are disposed on the machine frame (11) for the rectilinear displacement of the table tops (13, 14).

3. A machine according to one of Claims 1 or 2,
**characterised in that** to the lower tool support (22) is assigned a raisable workpiece support (30), over which a lowerable clamping shoe (32) assigned to the upper tool support (28) is located.

4. A machine according to one of Claims 1 to 3,
**characterised in that** the clamping shoe (32) is disposed at the lower end of the piston rod of a pressure medium cylinder (31).

## Revendications

1. Machine à usiner des pièces plates (10), telles que parois de meubles ou similaires, en position horizontale, avec au moins un porte-outil (22) présentant un outil (23, 24) pouvant se déplacer verticalement, et avec deux plaques de serrage (16), pouvant se déplacer parallèlement dans un plan horizontal, sur un bâti de machine (11), destinées à venir en prise avec les côtés frontaux de la pièce à usiner (10), à chaque plaque de serrage (16) étant associée une plaque d'appui (17) pour la pièce à usiner (10), caractérisée en ce que les plaques de serrage (16) sont disposées, de part et d'autre du porte-outil (22), sur un plateau droit (13) et sur un plateau gauche (14) qui sont montés de manière à pouvoir se déplacer en ligne droite le long de longerons de guidage horizontaux (12) fixés au bâti de machine (11), que les plaques d'appui (17) sont fixées, chacune, sur la face inférieure du plateau (13, 14) correspondant, que le porte-outil est monté, en tant que porte-outil inférieur (22) sur un support (15) qui est monté de manière à pouvoir se déplacer en ligne droite, entre les plateaux (13, 14), le long des longerons de guidage (12), que sur le support (15) s'étendent, à angle droit par rapport à ceux-ci, des longerons de guidage horizontaux (20) du bâti de machine (11), que le porte-outil (22) est fixé sur une plaque de montage (21) s'appuyant sur les longerons de guidage (20) du support (15) et que sur la plaque de montage (21) est fixé un bras en porte-à-faux (27), environ en forme de C en vue de côté, entourant un espace libre pour la pièce à usiner (20), à l'extrémité libre supérieure duquel est disposé un porte-outil supérieur (28) avec un outil (29) pouvant être sorti verticalement.

2. Machine suivant la revendication 1, caractérisée en ce que des cylindres pneumatiques sont disposés sur le bâti de machine (11), pour le déplacement en ligne droite des plateaux (13, 14).

3. Machine suivant l'une des revendications 1 ou 2, caractérisée en ce qu'au porte-outil inférieur (22) est associé un support de pièce à usiner (30), pouvant monter, au-dessus duquel se trouve un sabot de serrage (32) pouvant descendre, et associé au porte-outil supérieur (28).

4. Machine suivant l'une des revendications 1 à 3, caractérisée en ce que le sabot de serrage (32) est disposé à l'extrémité inférieure de la tige de piston d'un cylindre à fluide sous pression (31).
